(19) Europäisches Patentamt
European Patent Office
Office européen des brevets

(11) **EP 3 527 934 B1**

(12) **EUROPEAN PATENT SPECIFICATION**

(45) Date of publication and mention
of the grant of the patent:
**06.09.2023   Bulletin 2023/36**

(21) Application number: **18815501.4**

(22) Date of filing: **22.03.2018**

(51) International Patent Classification (IPC):
**G01B 11/03** (2006.01)          **F03D 17/00** (2016.01)
**G01B 21/02** (2006.01)          **G06T 7/246** (2017.01)
**G01B 11/16** (2006.01)

(52) Cooperative Patent Classification (CPC):
**G01B 11/03; F03D 17/00; G01B 11/16;**
**G06T 7/246;** F05B 2270/8041; G06T 2207/10016;
G06T 2207/30184

(86) International application number:
**PCT/CN2018/079969**

(87) International publication number:
**WO 2019/119663 (27.06.2019 Gazette 2019/26)**

(54) **METHOD, DEVICE AND SYSTEM FOR MEASURING TOWER TOP DISPLACEMENT OF WIND POWER GENERATOR SET**

VERFAHREN, VORRICHTUNG UND SYSTEM ZUR MESSUNG DER TURMKOPFVERSCHIEBUNG EINES WINDKRAFTGENERATORSATZES

PROCÉDÉ, DISPOSITIF ET SYSTÈME POUR MESURER UN DÉPLACEMENT DE SOMMET DE TOUR D'UN ENSEMBLE DE GÉNÉRATEUR D'ÉNERGIE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2017   CN 201711405223**

(43) Date of publication of application:
**21.08.2019   Bulletin 2019/34**

(73) Proprietor: **Beijing Goldwind Science & Creation Windpower Equipment Co., Ltd.**
**Beijing 100176 (CN)**

(72) Inventors:
• **WANG, Yu**
**Beijing 100176 (CN)**
• **YANG, Boyu**
**Beijing 100176 (CN)**
• **GUO, Xiaoliang**
**Beijing 100176 (CN)**

(74) Representative: **Vossius & Partner Patentanwälte Rechtsanwälte mbB**
**Siebertstrasse 3**
**81675 München (DE)**

(56) References cited:
| | |
|---|---|
| EP-A1- 3 002 455 | WO-A1-2015/198793 |
| CN-A- 102 902 242 | CN-A- 103 323 461 |
| CN-A- 106 296 694 | CN-A- 106 640 548 |
| CN-U- 203 756 444 | FR-A1- 2 882 404 |

## Description

### FIELD

The present disclosure relates to the field of wind power generation, and in particular, to a method, an apparatus and a system for measuring a displacement of a top of a tower of a wind turbine.

### BACKGROUND

EP 3 002 455 discloses a method and a device for determining operating parameters of a wind power plant, in which the operating parameters can be determined during operation of the wind power plant by means of optical methods. The operating parameters of a wind turbine can be determined by taking pictures of the wind turbine, in particular during the production operation of the wind turbine. A good statement about the operation of the wind turbine is possible if the images are taken from below a nacelle of the wind turbine and an optical axis of image acquisition is parallel or at an acute angle to a tower axis of the wind turbine.

The displacement of the top of the tower generally refers to a two-dimensional displacement at a top of the tower of a wind turbine, and is a key parameter to be considered when designing a wind turbine, which may directly or indirectly affects the operational stability and load capacity of the wind turbine.

Although the top of the tower may be observed by means of a camera, a telescope or the like, and an enlarged image of the top of the tower may be obtained by adjusting the focal length or the like, factors, such as the distance between an observation point and the top of the tower, the wind force and the like, may blur the image of the top of the tower. Therefore, the top displacement cannot be accurately measured by the blurred image of the top of the tower.

### SUMMARY

The present disclosure may at least addresses above issues and/or disadvantages and at least provides the following advantages. In addition, the present disclosure may not address above issues and/or disadvantages.

According to an aspect of the present disclosure, a method for measuring a displacement of a top of a tower of a wind turbine according to claim 1 is provided.

According to another aspect of the present disclosure, an apparatus for measuring a displacement of a top of a tower of a wind turbine according to claim 3 is provided.

According to another aspect of the present disclosure, a system for measuring a displacement of a top of a tower of a wind turbine according to claim 4 is provided.

According to another aspect of the present disclosure, a computer readable storage medium according to claim 5 is provided, which stores instructions that, when being executed by a processor, cause the processor to perform the above method.

According to another aspect of the present disclosure, a computer according to claim 6 is provided, which includes a computer readable storage medium storing instructions that, when being executed by a processor, cause the processor to perform the above method.

Additional aspects and/or advantages of the general concept of the present disclosure will be set forth in part in the following description, and other part will be apparent from the description, or may be known from the implementation of the general concept of the present disclosure.

### BRIEF DESCRIPTION OF THE DRAWINGS

The embodiments of the present disclosure will now be described in detail and examples of the embodiments are illustrated in the accompanying drawings, in which the same reference number refers to the same element. Hereinafter, the embodiments are described to explain the present disclosure in conjunction with the figures.

Figure 1 illustrates a flow chart of a method for measuring a displacement of a top of a tower of a wind turbine according to an exemplary embodiment of the present disclosure;

Figure 2 illustrates a schematic diagram of measuring a top of the tower using the method for measuring the displacement of the top of the tower of the wind turbine according to an exemplary embodiment of the present disclosure;

Figure 3 illustrates a block diagram of an apparatus for measuring a displacement of a top of a tower of a wind turbine according to an exemplary embodiment of the present disclosure; and

Figure 4 illustrates a block diagram of a system for measuring a displacement of a top of a tower of a wind turbine according to an exemplary embodiment of the present disclosure.

## DETAILED DESCRIPTION

Hereinafter, exemplary embodiments will be described in more detail with reference to the accompanying drawings to illustrate the inventive concept of the present disclosure.

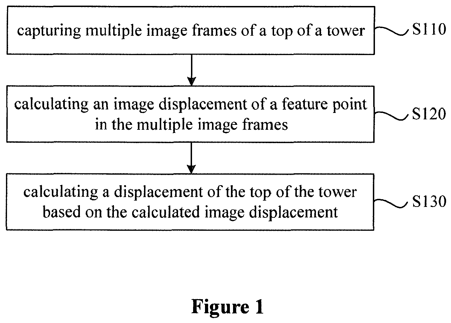

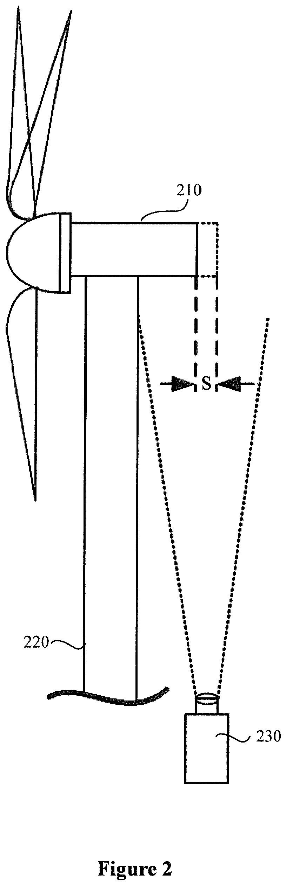

Figure 1 illustrates a flow chart of a method for measuring a displacement of a top of a tower of a wind turbine according to an exemplary embodiment of the present disclosure. Figure 2 illustrates a schematic diagram of measuring a top of the tower using the method for measuring the displacement of the top of the tower of the wind turbine according to an exemplary embodiment of the present disclosure.

As shown in Figure 1, a method for measuring a displacement of a top of a tower of a wind turbine according to an exemplary embodiment of the present disclosure includes step S110 to step S130.

In step S 110, multiple image frames of the top of the tower are captured. As shown in Figure 2, a nacelle 210 of the wind turbine is disposed at one end (i.e., top end) of a tower 220. The other end of the tower 220 may be disposed on the ground. The nacelle 210 will sway with the wind, resulting in a displacement S. If the displacement S is too large, a tower collapse accident is likely to be caused (for example, the tower 220 is broken off or falls towards the ground). If the displacement S is too small, the design of the wind turbine may be adjusted in consideration of factors such as cost, load, and power generation.

Since the nacelle 210 is disposed at the top end of the tower 220, the displacement at the top of the tower may be measured by measuring the displacement of the nacelle 210.

A camera 230 may capture multiple image frames of the top of the tower (e.g., nacelle 210) in a direction parallel with the tower 220. The camera 230 may be a camera with high speed and high definition. The camera 230 records a video of the top of the tower, which includes multiple image frames.

In step S120, an image displacement of a feature point in the multiple image frames is calculated. The feature point may be a pixel having a prominent feature in the image. The feature point may also be a point of interest, a corner point, or an edge point. The feature point may be clearer than a non-feature point, so that the image displacement calculated based on the feature point and the displacement of the top of the tower calculated based thereon are more accurate.

The step S120 includes: extracting a feature point from each image frame of the multiple image frames, where the feature points in the multiple image frames denote a same position on the top of the tower; calculating a relative displacement between the feature points belonging to different image frames among the extracted feature points, the calculated relative displacement being determined as the image displacement.

The number of feature points in each image frame is two or more. Corresponding feature points of the two or more feature points belonging to different image frames denote a same position on the top of the tower. In this case, the image displacement may be calculated by the following steps: extracting at least two feature points from each image frame of the multiple image frames, where corresponding feature points of the at least two feature points in the multiple image frames denote a same position on the top of the tower; calculating relative displacements between corresponding feature points that correspond to the same position belonging to different image frames among the extracted feature points, and calculating the average of the relative displacements as the image displacement. By calculating the image displacement using at least two feature points in each image frame, the calculated displacement of top of the tower can be more accurate.

As an example, feature points are extracted from each image frame of the multiple image frames by at least one of the following operation (a) through operation (e).

(a) a gray value of a pixel in each frame image is calculated, a first derivative of the gray value is calculated , and a pixel having a maximum value of the first derivative of the gray value within a first predetermined range is determined as the feature point for the image frame;

(b) a gray value of a pixel in each image frame is calculated, a first derivative and a second derivative of the gray value are calculated, and a pixel having a maximum value of the first derivative and the second derivative of the gray value within a second predetermined range is determined as the feature point for the image frame;

(c) a gray value of a pixel in each image frame is calculated, a first derivative and a second derivative of the gray value are calculated, and a pixel having a maximum value of the first derivative of the gray value within a third predetermined range and having the second derivative of the gray value of zero is determined as the feature point for the image frame;

(d) at least two image edge lines is extracted from each image frame by using an edge detecting method, an intersection point of the at least two image edge lines is calculated, and the calculated intersection point is determined as the feature point for the image frame;

(e) a Harris corner point in each image frame is calculated, and the Harris corner point is determined as the feature point for the image frame.

The process of calculating the Harris corner point in an image frame is as follows:

A mathematical model as described in Expression (1) is established.

$$E(u, v) = \sum_{x,y} w(x, y) \left[ I(x + u, y + v) - I(x, y) \right]^2 \quad (1)$$

Where, x and y denotes coordinates of a pixel in a particular coordinate system, $w(x, y)$ denotes a window function (e.g., a two-dimensional Gaussian function), $I(x, y)$ denotes a gray value of the pixel $(x, y)$, the gray value may be a weighted sum of x and y, $I(x + u, y + v)$ is a gray value of a pixel to which the pixel $(x, y)$ moved by u in the x-axis and moved by v in the y-axis, and $E(u, v)$ is a window gray value of a window represented by the window function the window being moved by u in the x-axis and by v in the y-axis from the original position.

A Taylor expansion is done on Expression (1) to obtain Expression (2):

$$I(x + u, y + v) = I(x, y) + I_x u + I_y v + O(u^2, v^2) \quad (2)$$

Where, $I_x$, and $I_y$ denotes derivatives of $I(x, y)$ respectively with respect to x and y, and $O(u^2, v^2)$ denotes a Taylor remainder.

In addition, Expression (3) is as follows.

$$[I_x u + I_y v]^2 = [u, v] \begin{bmatrix} I_x^2 & I_x I_y \\ I_x I_y & I_y^2 \end{bmatrix} \begin{bmatrix} u \\ v \end{bmatrix} \quad (3)$$

By substituting Expression (2) into Expression (1) and combining Expression (3), Expression (4) may be obtained as follows.

$$E(u, v) = \sum_{x,y} w(x, y) [I_x u + I_y v + O(u^2, v^2)]^2 \cong [u, v] M \begin{bmatrix} u \\ v \end{bmatrix} \quad (4)$$

$$M = \sum_{x,y} w(x, y) \begin{bmatrix} I_x^2 & I_x I_y \\ I_x I_y & I_y^2 \end{bmatrix}$$

Where, .

A corner point response function R is defined in Expression (5).

$$R = \det M - k(trace M)^2 \quad (5)$$

Where, $\det M = \lambda_1 \lambda_2$, $trace M = \lambda_1 + \lambda_2$, k is an empirical constant, which may take 0.04 or 0.06 or a value ranges from 0.04 to 0.06, $\lambda_1$, and $\lambda_2$ are respectively a minimum and a maximum among eigenvalues of a matrix M.

In a case that R is greater than 0, the pixel on the corresponding coordinate (x, y) is a corner point.

In step S130, the displacement of the top of the tower is calculated based on the calculated image displacement.

Step S130 includes: determining a correspondence relationship between an image displacement and an actual displacement; and calculating the displacement of the top of the tower based on the calculated image displacement and the determined correspondence relationship.

The correspondence relationship between the image displacement and the actual displacement is determined by the following steps: marking at least two label points on the top of the tower; calculating an actual distance between the at least two label points; calculating a relative distance of the at least two label points in the multiple image frames;

and determining the correspondence relationship based on the calculated actual distance and the relative distance.

In the embodiment, the relative distance and the relative displacement are both calculated based on the multiple image frames. Two pixels are corresponding feature points indicating a same position on the top of the tower, the two pixels belong to different image frames, and a reference point may be selected from each image frame of the different image frames. The reference point is not affected by the environment, that is, the reference point does not move. In this case, the relative distance and the relative displacement may be calculated by various methods. For example, the two pixels and the reference point may constitute a triangle, and the length of a third side may be calculated by the lengths of two sides (the distances respectively from the two pixels to the reference point) and the degrees of three inner angles (the degrees of the three inner angles may be easily calculated due to the known relative position between the two pixels and the reference point).

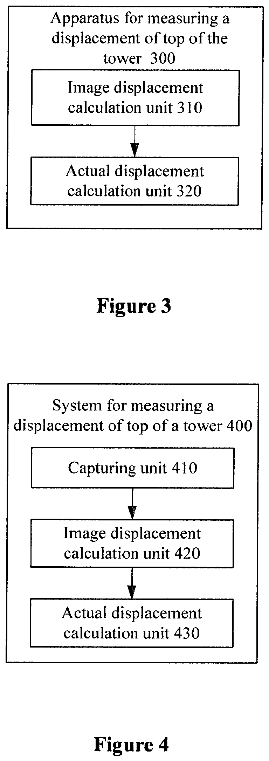

Figure 3 illustrates a block diagram of an apparatus 300 for measuring a displacement of a top of a tower of a wind turbine according to an exemplary embodiment of the present disclosure.

As shown in Figure 3, the apparatus 300 according to the exemplary embodiment includes an image displacement calculation unit 310 and an actual displacement calculation unit 320. The image displacement calculation unit 310 is configured to calculate an image displacement of a feature point in multiple image frames of the top of the tower; and the actual displacement calculation unit 320 is configured to calculate the displacement of the top of the tower based on the calculated image displacement.

displacement calculation unit 310 includes a feature point extraction unit (not shown) and a relative displacement calculation unit (not shown), the feature point extraction unit is configured to extract a feature point from each image frame of the multiple image frames, where the feature points from the multiple image frames denote a same position on the top of the tower. The relative displacement calculation unit is configured to calculate a relative displacement between the corresponding feature points belonging to different image frames among the extracted feature points, the calculated relative displacement being taken as the image displacement.

feature point extraction unit of the image displacement calculation unit 310 is configured to extract at least two feature points from each image frame of the multiple image frames, where corresponding feature points of the at least two feature points in the multiple image frames denote a same position on the top of the tower The relative displacement calculation unit of the image displacement calculation unit 310 configured to calculate relative displacements between the corresponding feature points that correspond to the same position belonging to different image frames among the extracted feature points, and take an average value of the relative displacements as the image displacement.

displacement calculation unit 320 includes a correspondence relationship determination unit (not shown), which is configured to determine a correspondence relationship between the image displacement and the actual displacement,. The actual displacement calculation unit 320 is further configured to calculate the displacement of the top of the tower based on the calculated image displacement and the determined correspondence relationship.

As an example, the feature point extraction unit extracts a feature point from each image frame of the multiple image frames by at least one of the following operations (a) through (e):

(a) a gray value of a pixel in each frame image is calculated, a first derivative of the gray value is calculated , and a pixel having a maximum value of the first derivative of the gray value within a first predetermined range is determined as the feature point for the image frame;

(b) a gray value of a pixel in each image frame is calculated, a first derivative and a second derivative of the gray value are calculated, and a pixel having a maximum value of the first derivative and the second derivative of the gray value within a second predetermined range is determined as the feature point for the image frame;

(c) a gray value of a pixel in each image frame is calculated, a first derivative and a second derivative of the gray value are calculated, and a pixel having a maximum value of the first derivative of the gray value within a third predetermined range and having the second derivative of the gray value of zero is determined as the feature point for the image frame;

(d) at least two image edge lines is extracted from each image frame by using an edge detecting method, an intersection point of the at least two image edge lines is calculated, and the calculated intersection point is determined as the feature point for the image frame;

(e) a Harris corner point in each image frame is calculated, and the Harris corner point is determined as the feature point for the image frame. A corner point may be calculated in the manner described above.

The extracted feature point as described above may be a point at a corner of a ventilation opening (not shown) of the nacelle 210 shown in Figure 2.

correspondence relationship determination unit of the actual displacement calculation unit 320 is further configured to calculate an actual distance between at least two label points marked on the top of the tower; calculate a relative distance between the at least two label points in the multiple image frames, and determine the correspondence relationship based on the calculated actual distance and the relative distance.

In the above embodiment, the relative distance and the relative displacement are both calculated based on the multiple image frames. Two pixels are corresponding feature points indicating a same position on the top of the tower, the two pixels belong to different image frames, and a reference point may be selected from each image frame in the different image frames. The reference point is not affected by the environment, that is, the reference point does not move. In this case, the relative distance and the relative displacement may be calculated by various methods. For example, the two pixels and the reference point may constitute a triangle, and the length of a third side may be calculated by the lengths of two sides (the distances respectively from the two pixels to the reference point) and the degrees of three inner angles (the degrees of the three inner angles may be easily calculated due to the known relative position between the two pixels and the reference point).

Figure 4 illustrates a block diagram of a system 400 for measuring a displacement of a top of a tower of a wind turbine according to an exemplary embodiment of the present disclosure.

As shown in Figure 4, the system 400 for measuring the displacement of the top of the tower according to the exemplary embodiment of the present disclosure includes a capturing unit 410, an image displacement calculation unit 420, and an actual displacement calculation unit 430. The capturing unit 410 is configured to capture multiple image frames of the top of the tower. The image displacement calculation unit 420 is configured to calculate an image displacement of a feature point in the multiple image frames of the top of the tower. The actual displacement calculation unit 430 is configured to calculate the displacement of the top of the tower based on the calculated image displacement.

The method for measuring the displacement of the top of the tower of the wind turbine according to exemplary embodiments of the present disclosure is implemented by the above apparatus or system. In addition, in the above embodiments, portions or features (for example, the detailed structures and features of the image displacement calculation unit 420 and the actual displacement calculation unit 430 of the system 400, respectively, may be implemented referring to corresponding structures and features of the apparatus 300) are not repeated in order to make the description clear and concise. Additionally, descriptions for the method may be applied to describe the apparatus or the system.

Whether the obtained displacement of the top of the tower is within a predetermined range may be determined after obtaining the displacement of top of the tower by the embodiment described above. The design of the wind turbine or the wind turbine generator system may be adjusted to reduce the cost or to increase operational stability and reliability, in a case that the displacement is not within the predetermined range.

In an exemplary embodiment, a computer readable storage medium is provided, which stores instructions that, when being executed by a processor, cause the processor to perform the above method. A computer according to another exemplary embodiment is provided, the computer includes a computer readable storage medium storing instructions that, when being executed by a processor, cause the processor to perform the above method.

A computer readable storage medium includes a program, instructions, a data file, a data structure or the like, or a combination thereof. The program or instructions stored in the computer readable storage medium may be designed or configured to conform to the present disclosure or may be software known to those of ordinary skill in the art. The computer readable storage medium includes a hardware system for storing and executing program commands. The hardware system may be, for example, a magnetic medium (such as a hard disk, a floppy disk, and a magnetic tape), optical medium (such as CD-ROM and DVD), magneto-optical media (such as a floppy-optical disk, ROM, RAM, a flash memory, etc.). The programs or instructions include an assembly language or a machine code compiled by a compiler and a high-level language interpreted by an interpreter. The hardware system may be implemented with at least one software module or unit to conform to the present invention.

At least one element of the above described apparatus or system may be implemented by one or more general purpose or special purpose computers (such as, a processor, a controller, a digital signal processor, a microcomputer, a field programmable array, a programmable logic unit, a microprocessor, or any other device capable of executing software or executing instructions) a. The at least one element may be run in an operating system or may be run in one or more software applications operating under the operating system. The at least one element may access, store, manipulate, process, and create data while running the software or instructions.

The description of the present disclosure has been presented for purposes of illustration and description, and the description does not intend to exhaust or limit the present disclosure. For those of ordinary skill in the art, various modifications and changes may be made to the embodiments without departing from scope of the present disclosure as defined by the appended claims.

**Claims**

1. A computer-implemented method for measuring a displacement of a top of a tower of a wind turbine, comprising:

   extracting at least two feature points from each image frame of a plurality of image frames of the top of the tower, wherein corresponding feature points of the at least two feature points in the plurality of image frames denote a same position on the top of the tower;
calculating relative displacements between the corresponding feature points that correspond to the same position belonging to different image frames among the extracted feature points;
calculating an average of the relative displacements as an image displacement;
marking at least two label points on the top of the tower;
calculating an actual distance between the at least two label points;
calculating a relative distance of the at least two label points in the plurality of image frames;
determining a correspondence relationship between the image displacement and an actual displacement based on the calculated actual distance and the relative distance; and
calculating the displacement of the top of the tower based on the calculated image displacement and the determined correspondence relationship.

2. The method according to claim 1, further comprising:
capturing, along a direction parallel to the tower, the plurality of image frames of the top of the tower.

3. An apparatus (300) for measuring a displacement of a top of a tower of a wind turbine comprising an image displacement calculation unit (310, 420) and an actual displacement calculation unit (320, 430),
the image displacement calculation unit (310, 420) comprising:

a feature point extraction unit and a relative displacement calculation unit, the feature point extraction unit configured to extract at least two feature points from each image frame of a plurality of image frames of the top of the tower, wherein corresponding feature points of the at least two feature points in the plurality of image frames denote a same position on the top of the tower;
and the relative displacement calculation unit configured to calculate relative displacements between the corresponding feature points that correspond to the same position belonging to different image frames among the extracted feature points; and
calculate an average of the relative displacements as an image displacement ;
the actual displacement calculation unit comprising a correspondence relationship determination unit, configured to:

mark at least two label points on the top of the tower; calculate an actual distance between the at least two label points;
calculate a relative distance between the at least two label points in the plurality of image frames, and determine a correspondence relationship between the image displacement and an actual displacement based on the calculated actual distance and the relative distance; and
the actual displacement calculation unit (320, 430) is configured to calculate the displacement of the top of the tower based on the calculated image displacement and the determined correspondence relationship.

4. A system (400) for measuring a displacement of a top of a tower of a wind turbine, comprising:

a capturing unit (410), configured to capture, along a direction parallel to the tower, a plurality of image frames of the top of the tower; and
the apparatus (300) according to claim 3.

5. A computer readable storage medium storing instructions that, when being executed by a processor, cause the processor to perform the method according to claim 1.

6. A computer, comprising a computer readable storage medium storing instructions that, when being executed by a processor, cause the processor to perform the method according to claim 1.

**Patentansprüche**

1. Computerimplementiertes Verfahren zum Messen einer Verschiebung der Spitze eines Turms einer Windkraftanlage, das aufweist:

Extrahieren von mindestens zwei Merkmalspunkten aus jedem Bildframe von mehreren Bildframes der Spitze des Turms, wobei entsprechende Merkmalspunkte der mindestens zwei Merkmalspunkte in den mehreren Bildframes eine selbe Position auf der Spitze des Turms bezeichnen;
Berechnen von relativen Verschiebungen zwischen den entsprechenden Merkmalspunkten, die derselben Position entsprechen, die zu verschiedenen Bildframes unter den extrahierten Merkmalspunkten gehören;
Berechnen eines Durchschnitts der relativen Verschiebungen als eine Bildverschiebung;
Markieren von mindestens zwei Markierungspunkten auf der Spitze des Turms;
Berechnen eines tatsächlichen Abstands zwischen den mindestens zwei Markierungspunkten;
Berechnen eines relativen Abstands der mindestens zwei Markierungspunkte in den mehreren Bildframes;
Bestimmen einer Korrespondenzbeziehung zwischen der Bildverschiebung und einer tatsächlichen Verschiebung, basierend auf dem berechneten tatsächlichen Abstand und dem relativen Abstand; und
Berechnen der Verschiebung der Spitze des Turms basierend auf der berechneten Bildverschiebung und der bestimmten Korrespondenzbeziehung.

2. Verfahren nach Anspruch 1, das ferner aufweist:
Erfassen, entlang einer Richtung parallel zum Turm, der mehreren Bildframes der Spitze des Turms.

3. Vorrichtung (300) zum Messen einer Verschiebung einer Spitze eines Turms einer Windkraftanlage, die eine Einheit (310, 420) zur Berechnung einer Bildverschiebung und eine Einheit (320, 430) zur Berechnung der tatsächlichen Verschiebung aufweist,
wobei die Einheit (310, 420) zur Berechnung einer Bildverschiebung aufweist:

eine Merkmalspunkt-Extraktionseinheit und eine Relativverschiebungs-Berechnungseinheit, wobei die Merkmalspunkt-Extraktionseinheit konfiguriert ist, mindestens zwei Merkmalspunkte aus jedem Bildframe von mehreren Bildframes der Spitze des Turms zu extrahieren, wobei entsprechende Merkmalspunkte der mindestens zwei Merkmalspunkte in den mehreren Bildframes eine selbe Position auf der Spitze des Turms bezeichnen;
und die Relativverschiebungs-Berechnungseinheit konfiguriert ist, Relativverschiebungen zwischen den entsprechenden Merkmalspunkten zu berechnen, die derselben Position entsprechen, die zu verschiedenen Bildframes unter den extrahierten Merkmalspunkten gehören; und
einen Durchschnitt der Relativverschiebungen als eine Bildverschiebung zu berechnen;
wobei die Einheit zur Berechnung der tatsächlichen Verschiebung eine Korrespondenzbeziehungs-Bestimmungseinheit aufweist, die konfiguriert ist:

mindestens zwei Markierungspunkte auf der Spitze des Turms zu markieren;
einen tatsächlichen Abstand zwischen den mindestens zwei Markierungspunkten zu berechnen;
einen relativen Abstand zwischen den mindestens zwei Markierungspunkten in den mehreren Bildframes zu berechnen, und
eine Korrespondenzbeziehung zwischen der Bildverschiebung und einer tatsächlichen Verschiebung basierend auf dem berechneten tatsächlichen Abstand und dem relativen Abstand zu bestimmen; und
die Einheit (320, 430) zur Berechnung der tatsächlichen Verschiebung konfiguriert ist, die Verschiebung der Spitze des Turms basierend auf der berechneten Bildverschiebung und der bestimmten Korrespondenzbeziehung zu berechnen.

4. System (400) zum Messen einer Verschiebung der Spitze eines Turms einer Windkraftanlage, das aufweist:

eine Erfassungseinheit (410), die konfiguriert ist, entlang einer Richtung parallel zum Turm mehrere Bildframes der Spitze des Turms zu erfassen; und
die Vorrichtung (300) nach Anspruch 3.

5. Computerlesbares Speichermedium, das Anweisungen speichert, die, wenn sie von einem Prozessor ausgeführt werden, den Prozessor veranlassen, das Verfahren nach Anspruch 1 durchzuführen.

6. Computer, der ein computerlesbares Speichermedium aufweist, das Anweisungen speichert, die, wenn sie von einem Prozessor ausgeführt werden, den Prozessor veranlassen, das Verfahren nach Anspruch 1 durchzuführen.

**Revendications**

1. Procédé mis en oeuvre par ordinateur pour mesurer un déplacement d'un sommet d'une tour d'une éolienne, comprenant :

l'extraction d'au moins deux points caractéristiques à partir de chaque trame d'image d'une pluralité de trames d'image du sommet de la tour, dans lequel des points caractéristiques correspondants des au moins deux points caractéristiques dans la pluralité de trames d'image désignent une même position sur le sommet de la tour ;

le calcul de déplacements relatifs entre les points caractéristiques correspondants qui correspondent à la même position appartenant à différentes trames d'image parmi les points caractéristiques extraits ;

le calcul d'une moyenne des déplacements relatifs comme étant un déplacement d'image ;

le marquage d'au moins deux points de repère sur le sommet de la tour ;

le calcul d'une distance réelle entre les au moins deux points de repère ;

le calcul d'une distance relative des au moins deux points de repère dans la pluralité de trames d'image ;

la détermination d'une relation de correspondance entre le déplacement d'image et un déplacement réel sur la base de la distance réelle calculée et de la distance relative ; et

le calcul du déplacement du sommet de la tour sur la base du déplacement d'image calculé et de la relation de correspondance déterminée.

2. Procédé selon la revendication 1, comprenant en outre :
la capture, le long d'une direction parallèle à la tour, de la pluralité de trames d'image du sommet de la tour.

3. Appareil (300) pour mesurer un déplacement d'un sommet d'une tour d'une éolienne comprenant une unité de calcul de déplacement d'image (310, 420) et une unité de calcul de déplacement réel (320, 430),
l'unité de calcul de déplacement d'image (310, 420) comprenant :

une unité d'extraction de point caractéristique et une unité de calcul de déplacement relatif, l'unité d'extraction de point caractéristique étant configurée pour extraire au moins deux points caractéristiques à partir de chaque trame d'image d'une pluralité de trames d'image du sommet de la tour, dans lequel des points caractéristiques correspondants des au moins deux points caractéristiques dans la pluralité de trames d'image désignent une même position sur le sommet de la tour ;

et l'unité de calcul de déplacement relatif étant configurée pour calculer des déplacements relatifs entre les points caractéristiques correspondants qui correspondent à la même position appartenant à différentes trames d'image parmi les points caractéristiques extraits ; et

calculer une moyenne des déplacements relatifs comme étant un déplacement d'image ;

l'unité de calcul de déplacement réel comprenant une unité de détermination de relation de correspondance, configurée pour :

marquer au moins deux points de repère sur le sommet de la tour ;

calculer une distance réelle entre les au moins deux points de repère ;

calculer une distance relative entre les au moins deux points de repère dans la pluralité de trames d'image, et déterminer une relation de correspondance entre le déplacement d'image et un déplacement réel sur la base de la distance réelle calculée et de la distance relative ; et

l'unité de calcul de déplacement réel (320, 430) est configurée pour calculer le déplacement du sommet de la tour sur la base du déplacement d'image calculé et de la relation de correspondance déterminée.

4. Système (400) pour mesurer un déplacement d'un sommet d'une tour d'une éolienne, comprenant :

une unité de capture (410), configurée pour capturer, le long d'une direction parallèle à la tour, une pluralité de trames d'image du sommet de la tour ; et

l'appareil (300) selon la revendication 3.

5. Support de stockage lisible par ordinateur stockant des instructions qui, lors de leur exécution par un processeur, amènent le processeur à réaliser le procédé selon la revendication 1.

6. Ordinateur, comprenant un support de stockage lisible par ordinateur stockant des instructions qui, lors de leur exécution par un processeur, amènent le processeur à réaliser le procédé selon la revendication 1.

| | |
|---|---|
| capturing multiple image frames of a top of a tower | S110 |

↓

| | |
|---|---|
| calculating an image displacement of a feature point in the multiple image frames | S120 |

↓

| | |
|---|---|
| calculating a displacement of the top of the tower based on the calculated image displacement | S130 |

**Figure 1**

**Figure 2**

```
┌─────────────────────────────────────┐
│  Apparatus for measuring a           │
│  displacement of top of the          │
│  tower  300                          │
│   ┌───────────────────────────────┐  │
│   │  Image displacement           │  │
│   │  calculation unit 310         │  │
│   └───────────────────────────────┘  │
│                  │                   │
│                  ▼                   │
│   ┌───────────────────────────────┐  │
│   │  Actual displacement          │  │
│   │  calculation unit 320         │  │
│   └───────────────────────────────┘  │
└─────────────────────────────────────┘
```

## Figure 3

```
┌─────────────────────────────────────┐
│   System for measuring a             │
│ displacement of top of a tower 400   │
│   ┌───────────────────────────────┐  │
│   │    Capturing unit 410         │  │
│   └───────────────────────────────┘  │
│                  │                   │
│                  ▼                   │
│   ┌───────────────────────────────┐  │
│   │  Image displacement           │  │
│   │  calculation unit 420         │  │
│   └───────────────────────────────┘  │
│                  │                   │
│                  ▼                   │
│   ┌───────────────────────────────┐  │
│   │  Actual displacement          │  │
│   │  calculation unit 430         │  │
│   └───────────────────────────────┘  │
└─────────────────────────────────────┘
```

## Figure 4

**EP 3 527 934 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3002455 A